# EUROPEAN PATENT APPLICATION

(11) **EP 4 030 745 A1**
(43) Date of publication of application: **20.07.2022**
(21) Application number: 21151652.1
(22) Date of filing: 14.01.2021
(51) Int. Cl.: H04N 5/225, H04N 5/232, H04N 5/247, G02B 7/28

(54) **A MULTIPLE CAMERA SYSTEM AND A METHOD FOR OPERATING THE MULTIPLE CAMERA SYSTEM**

(71) Applicant: Beijing Xiaomi Mobile Software Co., Ltd., Beijing 100085 (CN)
(72) Inventor: NIKKANEN, Jarno, 33720 TAMPERE (FI)
(74) Representative: dompatent von Kreisler Selting Werner - Partnerschaft von Patent- und Rechtsanwälten mbB

(57) **Abstract**

A method for operating a multiple camera system preferably implemented in a terminal, the method comprising: storing the minimum focus distance of at least one functional camera, wherein the system comprising at least a macro camera and a functional camera, each camera having at least one lens and an image sensor; obtaining a focus distance of an object to be captured; comparing the obtained focus distance with the stored minimum focus distance; switching to a corresponding camera according to the comparison result.

## Description

### Field

It is an object of the present invention to provide a method for operating a multiple camera system. Further, it is an object of the present invention to provide a multiple camera system for performing the operating method.

### Background

The present invention is related to digital cameras. More specifically, it is related to macro distance imaging use cases and how to activate macro distance imaging automatically. The present invention is especially related to camera phones that have multiple different world-facing camera modules, each having different focusing capabilities and different fields of view.

The focus range of smartphone cameras is typically from 10cm to infinity. A dedicated macro camera can have closest focus distance of e.g. 2,5cm. Very large camera sensors in mobile devices can have a minimum focus distance of 15cm or more. The reason is that larger physical sensor area means that focusing at e.g. 10cm distance requires moving the lens further away from the sensor than in case of smaller physical sensor area. Infinity focus distance lens position is closer to the sensor plane, whereas close-up focus distance lens position is further away from the sensor plane. The smartphones are nowadays typically designed to be very thin. This sets limitations on the height of the camera module. Consequently, the capability to focus to 10cm might need to be compromised in case of large camera sensors in order to meet the height limitations of the mobile form factor. At the same time, the trend is to use larger sensors, in order to get better image quality (better SNR, larger dynamic range, higher resolution).

Consequently, the trend of increasing mobile camera sensor physical area leads to increased minimum focus distance, which in turn leads to more needs for a separate macro camera that is used for close range imaging. However, when different cameras are used in a terminal, it is necessary for the users to manually switch between different cameras in order to focus properly, which of course causes slowness of image capturing.

Therefore, it is an object of the present invention to provide a method for operating a multiple camera system as well as a multiple camera system for performing the operating method to overcome the main limitations of prior camera design.

### Summary:

In an aspect of the present invention, a method for operating a multiple camera system is provided, the method comprises the steps of:
storing the minimum focus distance of at least one functional camera, wherein the system comprising at least a macro camera and at least one functional camera, each camera having at least one lens and an image sensor;
obtaining a focus distance of an object to be captured;
comparing the obtained focus distance with the stored minimum focus distance;
switching to a corresponding camera according to the comparison result.

Therein, the method is preferably implemented in a terminal which comprises a multiple camera system having two or more cameras. The multiple camera system comprises at least one macro camera and one functional camera or non-macro camera. Each camera comprises at least one lens for acquiring light rays from objects to be captured and one image sensor for transforming the acquired light rays into digital signals. Therein, each camera has its minimum focus distance as an inherent physical property and the functional camera has a greater minimum focus distance than the macro camera. Preferably, one or more cameras comprise more than one lens, i.e. a lens assembly. Preferably, one or more lens or lens assembly further comprises a lens actuator for adjusting the lens position. More preferably, one or more lens or lens assembly further comprises a lens sensor for detecting the actual lens position. After the minimum focus distance of the functional assembly is stored in the memory, the focus distance of an object to be captured is obtained. Subsequently, the obtained focus distance is compared with the stored minimum focus distance. Finally, a proper camera is chosen based on the comparison result.

Preferably before obtaining a focus distance of an object to be captured, it is determined an out-of-focus condition indicating that the object to be captured is out of focus with the current camera. Thus, with the currently activated camera the object to be captured cannot be set in focus resulting in a blurred representation of the object. If the out-of-focus condition indicates that the object is out of focus the following steps of the method are performed in order to switch to the proper camera of the multiple camera system.

Preferably, if the obtained focus distance is less than the minimum focus distance of the functional lens, switching to the macro camera for capturing image/video data is performed. In such cases, it will not be possible for the cameras other than a dedicated macro camera to focus in a very close distance, as the focus distance is out of the focus range of the functional camera.

Preferably, if the obtained focus distance is greater than the minimum focus distance of the functional camera, switching to the functional camera for capturing image/video data is performed. In such cases, the focus distance is in the focus range of the functional camera. Since normally functional cmeras have larger image sensor than macro cameras, it is preferred to switch to functional cameras for capturing images/videos whenever possible in order to achieve better image quality.

Preferably, only if the difference between the obtained focus distance and the minimum focus distance of the functional camera exceeds a predetermined threshold, the switching of the camera can be triggered. Thus, by the predetermined threshold a hysteresis is implemented for switching the respective camera. For example, if according to the comparison result, the preferred camera to be used is not the currently activated one, then a switching of camera is necessary. With the additional preset threshold (hysteresis factor), it is possible to prevent oscillation among different cameras. In particular, when then focus distance is very similar to the stored minimum focus distance. Therein, the preset threshold can be implemented when switching from the functional camera to the macro camera and/or when switching from the macro camera to the functional camera
- Preferably, the focus distance is calculated based on one or more of:
- the object size to be captured;
- Time-of-Flight, ToF or Lidar component;
- phase detection auto-focus, PDAF;
- contrast detection auto-focus, CDAF.

The focus distance can be detected based on multiple cues or a combination of one or more of these techniques: Therein, calculating focus distance based on the object size to be captured is done first by recognizing one or more objects based on pattern recognition, then determining one or more sizes of the recognized object(s) based on a pre-stored database. The distance to the recognized object can be calculated based on the determined size of the object(s). This method and system are described in detail in the applicant's previous European patent application 20185029.4 which content is fully incorporated here by reference.

Time-of-Flight (ToF) or LIDAR component may indicate that the correct focus distance is less or greater than the minimum focus distance of the functional (non-macro) camera. ToF measures the distance between a sensor and an object, based on the time difference between the emission of a signal and its return to the sensor, after being reflected by an object. Preferably, the multiple camera system comprises a dedicated sensor for performing ToF.

PDAF (phase detection auto-focus) and contrast AF focus curve may also indicate that the correct focus distance is less or greater than the minimum focus distance of the functional (non-macro) camera. However, since both PDAF and Contrast AF are impacted by the contrast of the target object,each of them might be applied individuly as secondary infromation when other focus distance determination methods are not available. Preferably, PDAF is combined with contrast AF focus curve information.

More preferably, each of the above-mentioned methods for determining the focus distance can be applied either individually or combined with any of others.

Further, it is an object of the present invention to provide a graphical user interface preferably implemented in a terminal device, comprising:
displaying a camera interface, wherein the camera interface comprises a plurality of shooting mode options, wherein the shooting mode options comprises at least a macro mode option;
displaying the currently activated shooting mode option in a different manner than other shooting mode options;
detecting an input to enable or disable the terminal device to perform the method mentioned above;
displaying the macro mode option in another different manner if the method mentioned above is enabled.

Therein, the camera interface includes a plurality of shooting modes options, e.g., Video, Photo, Macro, Portrait, etc. Each shooting mode option may be displayed directly in the camera interface or contained in a sub-menu of other options. Preferably, the camera interface comprises real-time scene acquired from one of the cameras. The currently activated shooting mode option is displayed in a different manner than other shooting mode options e.g., different color, different brightness, different animation, underlined, font size, etc. so that the user can be informed about the current mode. More preferably, the display effects can be combined with each other or applied individually. Further, user input is detected in order to enable or disable the operating method mentioned above. If according to the input, the operating method is enabled. The macro mode option in the camera interface is displayed in another different manner. Preferably, the macro mode option is displayed by superimposing more display effects than other shooting mode options (either activated or not activated).

Preferably, the input is a touch and/or gesture and/or voice input.

Therein, the input might be any operation that could trigger a response from the terminal. Preferably, a swiping gesture or a touch to a specific area. Additionally or alternatively, the input might be voice input which is recognized to match a preset template. Users may also set any triggering method according to personal preferences.

Further, it is an object of the present invention to provide a multiple camera system, the system comprises:
at least one macro camera and at least one functional camera, wherein each camera having at least one lens and an image sensor;
a processor
and a memory having code embedded therein for programming the processor to perform an operation method in accordance with any of the methods mentioned above.

Preferably, the multiple camera system is part of a terminal.

The invention is further described with reference to the accompanying figures.

The figures show:
Fig. 1: a smartphone with different physical world-facing cameras,
Fig. 2a and 2b: comparison of an image out of focus and in focus,
Fig. 3: an example of a camera interface (prior art),
Fig. 4: an example of manual macro camera activation (prior art),
Fig. 5: an embodiment according to the present invention,
Fig. 6: flow chart illustrating the steps of a first embodiment of the present invention,
Fig. 7: a device according to an embodiment of the present invention,

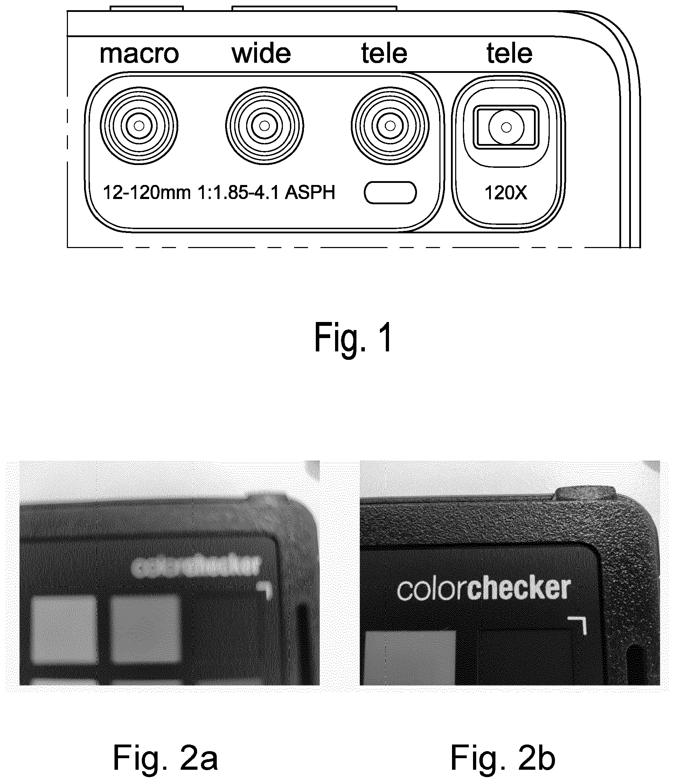

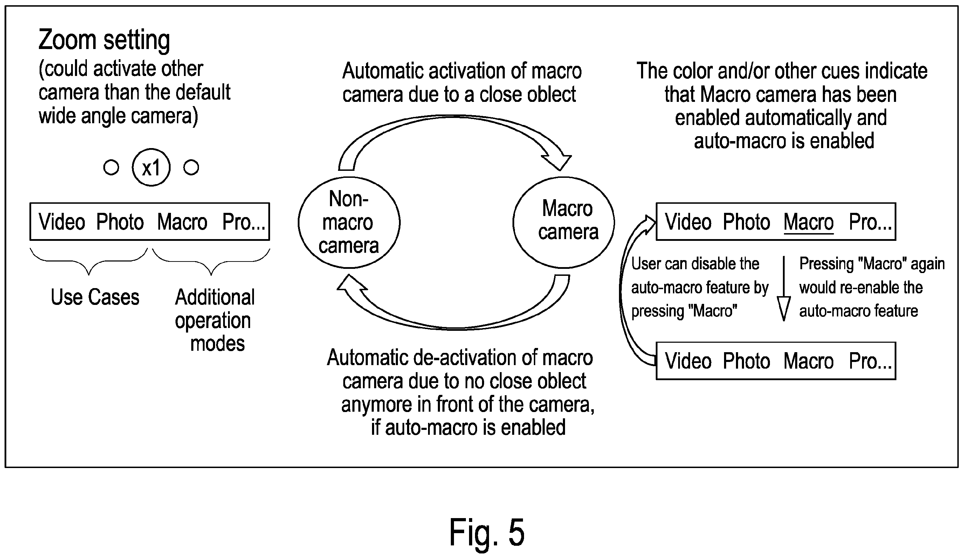

Figures 1 - 4 show some implementations of multiple camera system in the prior art. Figure 5 - 7 show some embodiments according to the present invention.

Figure 1 shows a smartphone designed to have multiple different physical world-facing cameras, therein
- Wide-angle camera (= the main camera) for various use cases
- Ultra-wide-angle camera for use cases that require a very large field of view to be captured
- Macro camera for close-up photos and videos
- Telephoto camera to capture subjects at long distances

Therein, the present invention is not limited to the shown combination of cameras and the smartphone according to the present invention may have more or less cameras but at least one macro camera and one further non-macro camera referred to as functional camera.

In the current mobile phone camera applications, the user can manually select the camera to be used from the UI of the camera application. If the user has a non-macro camera activated and the user moves very close to the subject with the intention to capture a close-up photo, then the image will be out-of-focus, as shown in Figure 2a, because the non-macro camera cannot focus in a very close distance. The user has to understand how to switch manually to activate the macro camera in order for the camera to be able to focus properly to a close distance. Figure 2b shows an image acquired after the macro camera is manually activated.

The problem with the current design is that some users do not know why the image is out-of-focus and do not know that a macro camera should be used. In addition, the need to switch manually to the macro camera adds latency to image capture.

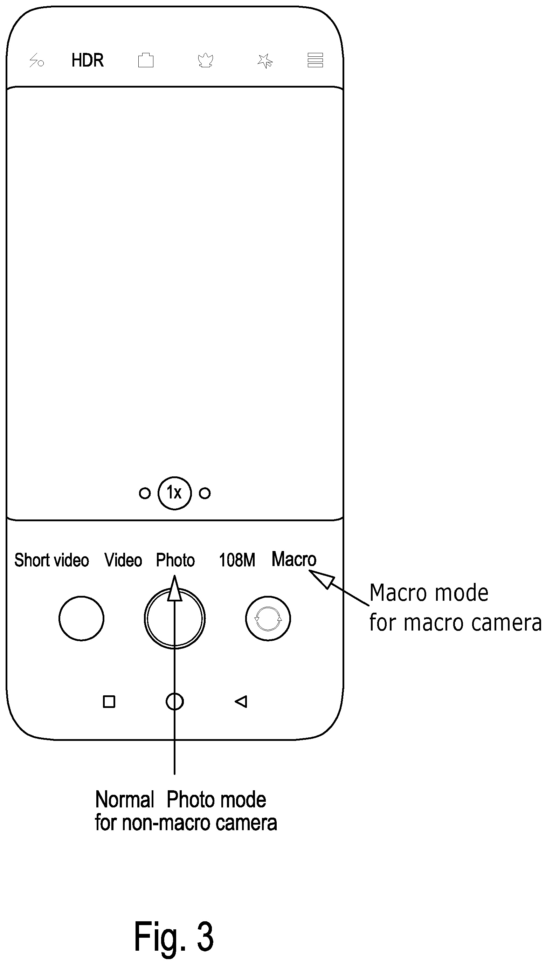

Figure 3 shows a camera interface, real-time scene acquired from one of the cameras or the currently activated camera is displayed in the middle of the screen. Different shooting mode options are displayed both at the upper end of the screen and the lower end of the screen. Therein, the "macro mode" option is hidden in a sub-list of one of the options displayed.

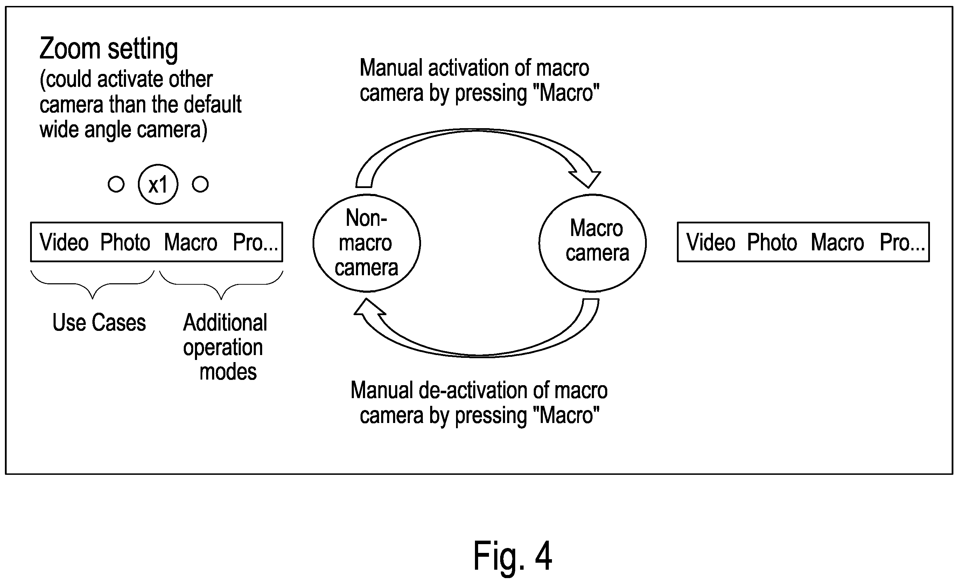

Figure 4 shows an example of manual activation user interface. The leftmost figure is part of a camera interface including several shooting mode options. Therein, the option "photo" is shown in a different color. Therefore, the user is informed that currently the camera is ready for capturing photos and no particular camera has been chosen (default camera is activated). In case the user wishes to catch a close-up photo with very close focus distance, the user should press the "Macro" option in order to activate the macro camera. When the macro camera is activated, the corresponding option is displayed in a different color so that the user is aware of the current shooting mode as shown in the rightmost figure. User may press the "Macro" option again to de-active the macro camera and the default camera would be working again.

Figure 5 shows an embodiment according to the present invention. In a typical use case, the user launches the camera application to capture a photo or to record a video. Whether it is still capture (default) or record can be selected by pressing "Photo" or "Video" option in the UI. If the target object is very close and cannot be focused on by the current non-macro camera (e.g. default wide-angle camera or zoom or ultra-wide camera based on the zoom setting), the macro camera is activated automatically. At this point, it is possible for the user to disable the auto-macro functionality by pressing the "Macro" camera option if the user intends to capture only macro images. If the auto-macro is not disabled and the user points the camera to some other scene that is not in macro distance, then the camera application will automatically switch back to the non-macro camera that was active prior to automatically switching to macro camera, for example, the default wide-angle main camera.

The presented invention provides a method to activate the macro camera automatically instead of relying on manual activation, in such way that is compatible with multi-camera mobile devices that rely on a separate camera module for macro focus capability.

The proposed invention detects automatically the condition when the macro camera should be activated instead of the non-macro cameras and switches the active camera automatically from the non-macro camera to macro camera. This makes the operation easier and faster for the user. The operating method is preferably performed according to the following embodiment:
- Store the information about minimum focus distance per each camera
   ∘ E.g. ∼10cm for a typical non-macro camera and ∼2.5cm for the macro camera, and up to ∼30cm for a particularly large format camera sensor such as 1/1.2" or bigger (when the minimum focus distance needs to be increased in order to meet the camera module height requirements)
   ∘ Let the minimum focus distance for non-macro camera i be denoted as d_{min,i}
- When AF fails due to too close focus distance d_{tgt} required (d_{tgt} < d_{min,i}), then switch automatically from non-macro camera to macro camera. Preferably, store the information about the non-macro camera i that was active when the focus fail condition was met
   ∘ Set auto-macro flag to TRUE
- If auto-macro flag is TRUE and the user touches the "Macro" option in the UI, then disable the auto-macro feature and set the flag to FALSE
- If auto-macro flag is TRUE and the current focus distance d_{tgt} does not anymore require use of macro camera (d_{tgt} > d_{min,i} + d_{hysteresis}), then return back to the original camera mode for non-macro camera i and set auto-macro flag to FALSE. The hysteresis factor d_{hysteresis} is introduced to prevent oscillation between the camera modes when there is variation in d_{tgt} due to noise, AF precision, etc. reasons.

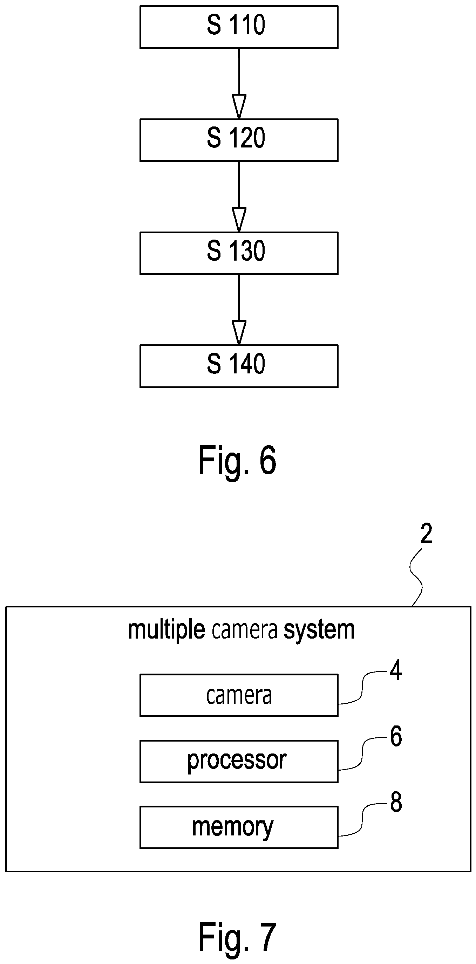

Figure 6 is a flow chart illustrating the steps of a first embodiment of the present invention. It shows a method for operating a multiple camera system preferably implemented in a terminal, the method comprising:
storing the minimum focus distance of at least one functional camera, wherein the system comprising at least a macro camera and a functional camera, each camera having at least one lens and an image sensor (S 110);
obtaining a focus distance of an object to be captured (S 120);
comparing the obtained focus distance with the stored minimum focus distance (S130);
switching to a corresponding camera according to the comparison result (S 140).

Thus, in accordance with the present invention, the obtained focus distance is used to determine which camera to activate in order to capture a photo or to record a video of the best quality. It is possible to switch to a proper camera in a timely manner even without user intervention.

In embodiments of the operating method, if the obtained focus distance is less than the minimum focus distance of the functional lens, switching to the macro camera for capturing image/video data.

In embodiments of the operating method if the obtained focus distance is greater than the minimum focus distance of the functional lens, switching to the functional camera for capturing image/video data.

In embodiments of the operating method only if the difference between the obtained focus distance and the minimum focus distance of the functional camera exceeds a predetermined threshold, the switching of lens and image sensor can be triggered.

In embodiments of the operating method, the focus distance is calculated based on one or more of:
the object size to be captured;
Time-of-Flight, ToF or Lidar component;
phase detection auto-focus, PDAF;
contrast detection auto-focus, CDAF.

Figure 7 shows a device according to an embodiment of the present invention. A multiple camera system 2 may comprise: at least one macro camera 4 and at least one functional camera, wherein each camera having at least one lens and an image sensor; a processor 6 and a memory 8 having code embedded therein for programming the processor 6 to perform an operation method in accordance with any of the methods described in the present application. The multiple camera system 2 can also be integrated with any kinds of terminals, such as digital camera, smartphone, tablet, laptop or computer or the like.

In embodiments of the present invention, the operating method as described in detail above is implemented in a multiple camera system. The system comprises a storing module configured to store the minimum focus distance of at least one functional camera, wherein the system comprises at least a macro camera and a functional camera, each camera having at least one lens and an image sensor; an acquiring module configured to obtain a focus distance of an object to be captured; a comparing module configured to compare the obtained focus distance with the stored minimum focus distance; and a switching module configured to switch to a corresponding camera according to the comparison result.

## Claims

1. A method for operating a multiple camera system preferably implemented in a terminal, the method comprising:
storing the minimum focus distance of at least one non-macro camera, wherein the system comprising at least a macro camera and at least one functional camera, each camera having at least one lens and an image sensor;
obtaining a focus distance of an object to be captured;
comparing the obtained focus distance with the stored minimum focus distance;
switching to a corresponding camera according to the comparison result.

2. The method according to claim 1, **characterized in that** before obtaining a focus distance of an object to be captured:
determining an out-of-focus condition indicating that the object to be captured is out of focus with the current camera.

3. The method according to claims 1 or 2, **characterized in that** if the obtained focus
distance is less than the minimum focus distance of the functional camera, switching to the macro camera for capturing image/video data.

4. The method according to any of claims 1 to 3, **characterized in that** if the obtained
focus distance is greater than the minimum focus distance of the functional camera, switching to the functional camera for capturing image/video data.

5. The method according to any of claims 2 - 4, **characterized in that** only if the
difference between the obtained focus distance and the minimum focus distance of the functional camera exceeds a predetermined threshold, the switching of the camera can be triggered.

6. The method according to any of claims 1 - 5, **characterized in that** the focus
distance is calculated based on one or more of : the
object size to be captured;
Time-of-Flight, ToF or Lidar component;
phase detection auto-focus, PDAF;
contrast detection auto-focus, CDAF.

7. A computer-implemented method preferably implemented in a terminal device, comprising:
displaying a camera interface, wherein the camera interface comprises a plurality of shooting mode options, wherein the shooting mode options comprises at least a macro mode option;
displaying the currently activated shooting mode option in a different manner than other shooting mode options;
detecting an input to enable or disable the terminal device to perform the method of any of claims 1 -6;
displaying the macro mode option in another different manner if the method of any of claims 1 - 6 is enabled.

8. The method of claim 6, **characterized in that** the input is a touch input and/or a gesture and/or a voice input.

9. A multiple camera system comprising:
at least one macro camera and at least one functional camera, wherein each camera having at least one lens and an image sensor;
a processor
and a memory having code embedded therein for programming the processor to perform an operation method in accordance with any of the methods of claims 1 - 6.

10. A terminal having a multiple camera system according to claim 9.
